# EUROPEAN PATENT APPLICATION

(11) **EP 1 571 830 A2**
(43) Date of publication of application: **07.09.2005**
(21) Application number: 05004045.0
(22) Date of filing: 24.02.2005
(51) Int. Cl.: H04N 3/15, H04N 5/32

(54) **Method for CCD sensor control, CCD sensor system and X-ray diffraction apparatus**

(30) Priority: 27.02.2004 JP 2004053241
(71) Applicant: Rigaku Corporation, Tokyo 196-8666 (JP)
(72) Inventor: Taguchi, Takeyoshi, Akishima-shi Tokyo 196-8666 (JP)
(74) Representative: Geyer, Ulrich F.

(57) **Abstract**

A full frame transfer type CCD sensor (14) can selectively execute one of a TDI recording mode in which the CCD sensor (14) executes a TDI operation to record a moving image relative to the CCD sensor (14) and a still recording mode in which the CCD sensor (14) records a stationary image relative to the CCD sensor (14). In the still recording mode, the charge transfer is prohibited, in the exposure step, with a halt condition of the charge transfer clock signal or with the transfer period (t1) of the charge transfer clock signal longer than the exposure time (ts).

## Description

### BACKGROUND OF THE INVENTION

### 1. Field of the Invention

The present invention relates to a method for CCD sensor control, a CCD sensor and an X-ray diffraction apparatus using a full frame transfer (FFT) type CCD sensor and capable of recording both of a moving image with a TDI operation and a stationary image with a stationary sensor and a stationary object.

### 2. Description of the Related Art

The full frame transfer type CCD sensor can execute a TDI (Time Delay Integration) operation to record a moving image relative to the CCD sensor with a high sensitivity as disclosed in, for example, Japanese patent publication No. 2001-231779 A, which will be referred to as the first publication hereinafter.

The first publication discloses the use of the TDI-operable CCD sensor as the recording device for X-ray images in the medical X-ray photography. A human body, which is a photographic object, is stationary while the X-ray source and the CCD sensor are moved, the CCD sensor executing the TDI operation synchronously with the movement of the sensor to obtain an X-ray image. The first publication explains the principle of the TDI operation with an easy-to-understand description. The first publication also discloses: (1) the selection between one operation mode which is based on the built-in TDI clock signal of the CCD sensor, called as a self-driving mode in the publication, and another operation mode which is based on the TDI clock signal supplied from the X-ray photography apparatus, called as a driven mode in the publication; and (2) the selection between the normal photography mode and the high-speed photography mode, the selection being possible with the change of the frequency of the TDI clock signal.

The full frame transfer type CCD sensor is, in consideration of its principle of operation, hardly applicable to a video camera, and has been applied mainly to measurement and analysis purposes.

On the other hand, the CCD sensors other than the full frame transfer type, for example, the frame transfer type, the interline transfer type and the frame interline transfer type, have been frequently applied to the general-purpose video camera and the like. These CCD sensors can record a still image with the sensor held stationary, the operation being described below. The shutter opens during the predetermined exposure time to irradiate the CCD sensor with an image ray and thereafter the shutter closes and the charge transfer operation is carried out under several MHz in transfer frequency to execute high-speed readout of the charges which are accumulated in respective pixels, so as to record, as a still image, a two-dimensional image of an image ray incident on the CCD. With respect to the above-described general-purpose type CCD sensor, it is known to halt the charge transfer clock signal during the exposure time. For example, Japanese patent publication No. 3-284073 A (1991), which is referred to as the second publication, discloses the halt condition of the transfer clock signal during the exposure time with respect to the interline transfer type CCD sensor.

The TDI-operable CCD sensor as disclosed in the first publication can record a moving image relative to the CCD sensor with a high sensitivity with a synchronous relationship between the relative moving speed of the image and the transfer frequency of the TDI operation.

Incidentally, there are some cases which want to record a stationary object with the CCD sensor held stationary even in the image recording system having the TDI-operable CCD sensor. The TDI-operable CCD sensor usually can not record an image under the condition of the stationary sensor and the stationary object, such a condition being called as "still recording" hereinafter. On the contrary, if the still recording becomes possible even with the TDI-operable CCD sensor with any improved control method, a separate dedicated CCD sensor for the still recording would not be required advantageously. Although it is known to execute the still recording for a grab shot by halting the transfer clock signal during the exposure time with respect to the general-purpose type CCD sensor as disclosed in the above-mentioned second publication, there is not known a method for realizing the still recording with the TDI-operable CCD sensor.

### Summary of the Invention

It is an object of the present invention to provide a CCD sensor control method, a CCD sensor system and an X-ray diffraction apparatus all of which can make a selection, with the use of the full frame transfer type CCD sensor, between a relatively-moving-image recoding mode with the TDI operation and the still recording mode.

A method for controlling a CCD sensor according to the present invention comprises the steps of: (a) preparing a full frame transfer type CCD sensor; (b) selecting one of a TDI recording mode in which the CCD sensor executes a TDI operation to record a moving image relative to the CCD sensor and a still recording mode in which the CCD sensor executes a still operation to record a stationary image relative to the CCD sensor; and (c) executing the TDI recording mode when the TDI recording mode is selected, and executing the still recording mode when the still recording mode is selected.

When the still recording mode is selected, there is usable any one of four control methods described below. The first and the second control methods utilize the internal transfer clock signal only: the first control method uses a long transfer period during the exposure time, whereas the second control method uses the halt condition of the transfer clock signal during the exposure time. The third control method utilizes both of the external transfer clock signal and the internal transfer clock signal. The fourth control method utilizes the external transfer clock signal only.

The first control method includes the steps of: (d) irradiating the CCD sensor with an electromagnetic wave to be measured during an exposure time less than a first transfer period under a condition of executing a charge transfer operation with the first transfer period; and (e) reading out the CCD sensor by executing a charge transfer operation with a second transfer period less than the first transfer period under a condition of no irradiation of the CCD sensor with the electromagnetic wave to be measured.

The second control method includes the steps of: (d) irradiating the CCD sensor with an electromagnetic wave to be measured during a predetermined exposure time under a condition of no supply of transfer clock signal to the CCD sensor; and (e) reading out the CCD sensor by executing a charge transfer operation with a predetermined transfer period under a condition of no irradiation of the CCD sensor with the electromagnetic wave to be measured.

The third control method includes the steps of: (d) irradiating the CCD sensor with an electromagnetic wave to be measured during a predetermined exposure time in an external control mode, in which a charge transfer operation is carried out based on an external transfer clock signal, but under a halt condition of the external transfer clock signal; and (e) reading out the CCD sensor by executing a charge transfer operation based on an internal transfer clock signal under a condition of no irradiation of the CCD with the electromagnetic wave to be measured after an exchange from the external control mode to an internal control mode in which a charge transfer operation is carried out based on the internal transfer clock signal.

The fourth control method includes the steps of: (d) irradiating the CCD sensor with an electromagnetic wave to be measured during a predetermined exposure time in an external control mode, in which a charge transfer operation is carried out based on an external transfer clock signal, but under a halt condition of the external transfer clock signal; and (e) reading out the CCD sensor by executing a charge transfer operation based on the external transfer clock signal in the external control mode under a condition of no irradiation of the CCD sensor with the electromagnetic wave to be measured.

Any one of the above-described control methods is applicable to an X-ray diffraction apparatus by having the following features: (f) the electromagnetic wave to be measured is a diffracted X-ray in an X-ray diffraction apparatus; (g) a charge transfer direction in the TDI operation coincides with a direction of variation in diffraction angle of the diffracted X-ray; and (h) a product of a transfer frequency of the TDI operation and a pixel size of the CCD sensor along the charge transfer direction coincides with a relative speed between the CCD sensor and the diffracted X-ray in the direction of variation in diffraction angle.

A CCD sensor system according to the present invention comprises: (a) a full frame transfer type CCD sensor; (b) means for executing a TDI recording mode in which the CCD sensor executes a TDI operation to record a moving image relative to the CCD sensor; (c) means for executing a still recording mode in which the CCD sensor records a stationary image relative to the CCD sensor; and (d) means for selecting and actuating one of the TDI recording mode executing means and the still recording mode executing means.

The still recording mode executing means may be any one of four configurations in response to the above-described four control methods for the still recording mode.

The first configuration of the still recording mode executing means includes: (e) means for controlling irradiation of the CCD sensor with an electromagnetic wave to be measured during an exposure time less than a first transfer period under a condition of executing a charge transfer operation with the first transfer period; and (f) means for controlling readout of the CCD sensor by executing a charge transfer operation with a second transfer period less than the first transfer period under a condition of no irradiation of the CCD sensor with the electromagnetic wave to be measured.

The second configuration includes: (e) means for controlling irradiation of the CCD sensor with an electromagnetic wave to be measured during a predetermined exposure time under a condition of no supply of transfer clock signal to the CCD sensor; and (f) means for controlling readout of the CCD sensor by executing a charge transfer operation with a predetermined transfer period under a condition of no irradiation of the CCD sensor with the electromagnetic wave to be measured.

The third configuration includes: (e) means for controlling irradiation of the CCD sensor with an electromagnetic wave to be measured during a predetermined exposure time in an external control mode, in which a charge transfer operation is carried out based on an external transfer clock signal, but under a halt condition of the external transfer clock signal; and (f) means for controlling readout of the CCD sensor by executing a charge transfer operation based on an internal transfer clock signal under a condition of no irradiation of the CCD sensor with the electromagnetic wave to be measured after an exchange from the external control mode to an internal control mode in which a charge transfer operation is carried out based on the internal transfer clock signal.

The fourth configuration includes: (e) means for controlling irradiation of the CCD sensor with an electromagnetic wave to be measured during a predetermined exposure time in an external control mode, in which a charge transfer operation is carried out based on an external transfer clock signal, but under a halt condition of the external transfer clock signal; and (f) means for controlling readout of the CCD sensor by executing a charge transfer operation based on the external transfer clock signal in the external control mode under a condition of no irradiation of the CCD sensor with the electromagnetic wave to be measured.

Any one of control methods and systems enables the TDI recording and the still recording to be carried out by designing the transfer clock signal in both of the exposure step and the readout step.

The electromagnetic wave to be measured is not limited to specific ones provided that it can be measured with the CCD sensor: it may be an X-ray, an ultraviolet ray, a visible ray, an infrared ray and so on.

The present invention has the advantages, with the use of the full frame transfer type CCD sensor, that the selection is possible, by designing the transfer clock signal, between the relatively-moving-image recording mode with the TDI operation and the still recording mode.

### Brief Description of the Drawings

Fig. 1 is a perspective view showing major components of an X-ray diffraction apparatus to which the present invention is applicable;
Fig. 2 illustrates a configuration of a CCD sensor;
Fig. 3 illustrates an arrangement of storage cells in a memory which stores the measured raw data;
Fig. 4 shows a time chart indicating the first control method;
Fig. 5 shows a time chart indicating the second control method;
Fig. 6 shows a time chart indicating the third control method;
Fig. 7 shows a time chart indicating the fourth control method; and
Fig. 8 is a graph showing a measured X-ray diffraction pattern.

### Detailed Description of the Preferred Embodiments

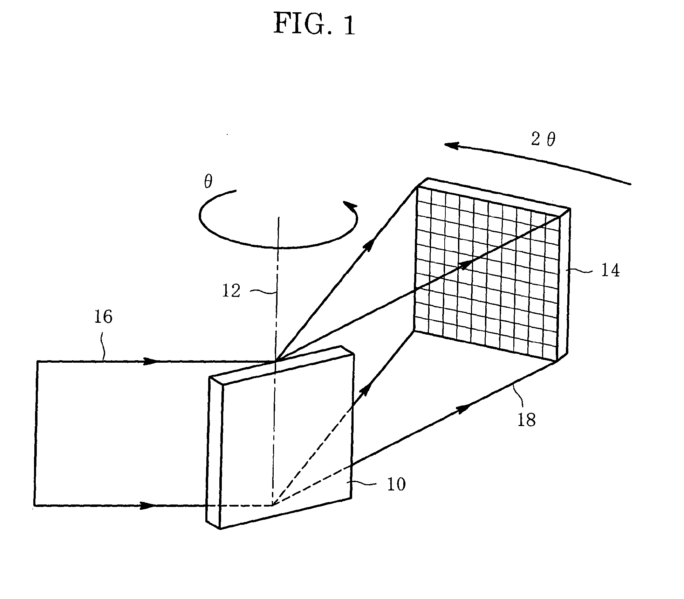

Embodiments of the present invention will now be described below with reference to the drawings. Referring to Fig. 1, an X-ray diffraction apparatus shown is to measure a powder diffraction pattern. An X-ray source generates an X-ray beam 16 with a vertically elongated cross section, the beam 16 being incident on a surface of a sample 10. An X-ray 18 diffracted at the sample 10 is detected by a TDI-operable CCD sensor 14. The sample 10 rotates around an axis of rotation 12 of a goniometer, the rotation being called as a θ-rotation. On the other hand, the CCD sensor 14 rotates around the same axis of rotation 12, the rotation being called as a 2θ-rotation. Namely, the sample 10 and the CCD sensor 14 are driven with a θ/2θ scanning during the X-ray diffraction measurement, so that the CCD sensor 14 can record a powder diffraction pattern of the sample 10.

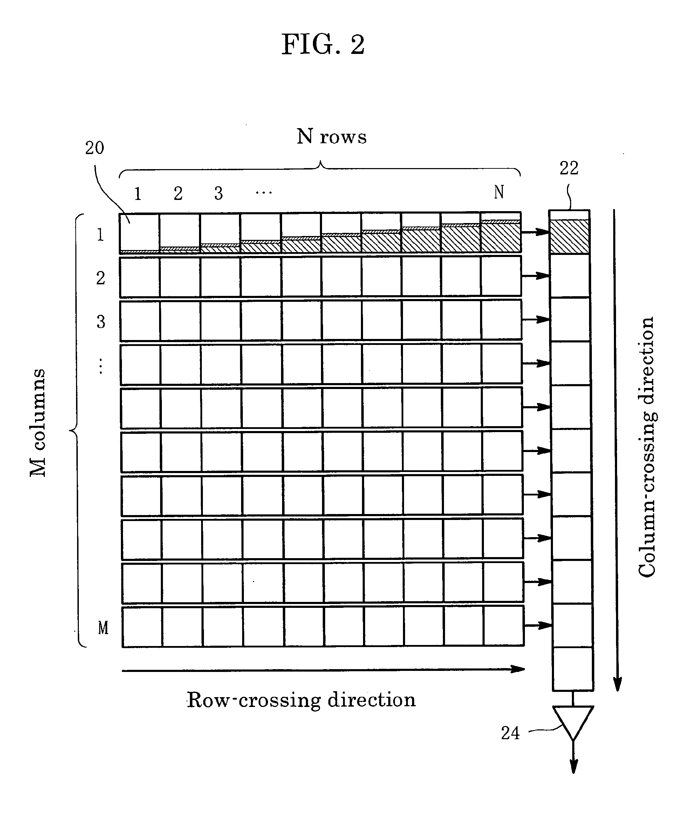

Fig. 2 illustrates a configuration of the CCD sensor which is a full frame transfer (FFT) type CCD sensor capable of executing the TDI operation. The CCD sensor includes N-row times M-column pixels, 512 times 512 pixels in this embodiment. In each column, photo acceptance cells 20 are arranged in line from the first row to the Nth row. Each acceptance cell 20 makes up one pixel and acts as a potential well, i.e., electronic well, for accumulating electric charges. The N acceptance cells from the first row to the Nth row make up an analog-type vertical shift resister. When the acceptance cell 20 receives an X-ray, the acceptance cell generates signal charges which are accumulated in the cell. The accumulated charges are transferred to the next row on every reception of a vertical transfer clock signal. The pulse interval of the vertical transfer clock signal corresponds to the transfer period of the TDI operation. The charges in the last Nth row are transferred to an analog-type horizontal shift resister 22 which is made of potential wells including the first column to the Mth column. The charges in each column of the horizontal shift resister 22 are transferred to the next column on every reception of a horizontal transfer clock signal. The charges in the potential well of the Mth column are converted to an analog voltage signal in the output circuit 24 and the voltage signal is read out.

In the X-ray diffraction apparatus as shown in Fig. 1, when it is intended to record a diffraction pattern under a combination of the 2θ-rotation of the CCD sensor and the TDI operation of the CCD sensor, a specified relationship must be established between the speed of the 2θ-rotation and the transfer frequency of the TDI operation of the CCD sensor. It would be advantageous for establishing the relationship that the control device of the X-ray diffraction apparatus feeds a transfer timing signal, which is based on the speed of the 2θ-rotation, to the CCD sensor. Stating in detail, the control operation is carried out so that the product of the transfer frequency of the TDI operation and the pixel size of the CCD sensor along the charge transfer direction, i.e., row-crossing direction in Fig. 2, coincides with the moving speed of the 2θ-rotation of the CCD sensor.

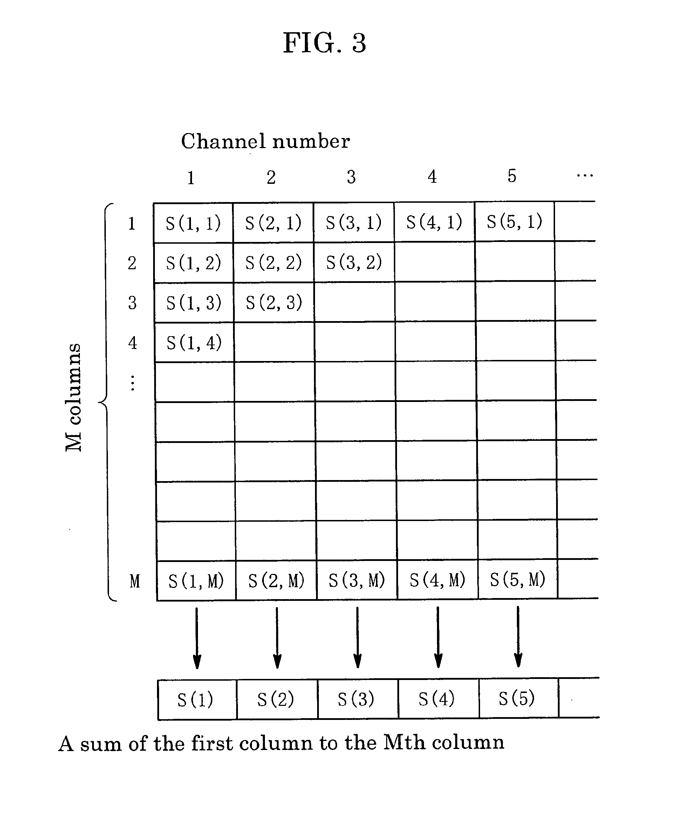

Fig. 3 illustrates an arrangement of storage cells in a memory which temporarily stores the measured raw data coming from the output circuit 24 in Fig. 2. The measured raw data is denoted by a symbol S, and the measured raw data in the first column of the first channel is expressed by S(1,1). The measured raw data in the cells ranging from the first column to the Mth column of the first channel, S(1,1), S(1,2), S(1,3), ....., S(1,M), are stored respectively in the M storage cells in the first channel. Similarly, the data in the second and more other channels are stored in the respective storage cells. The direction along which the channel number increases coincides with the direction along which the diffraction angle 2θ increases. If the thus stored measured raw data in the two-dimensional arrangement are displayed in the display as they are, it would become a two-dimensional image. On the other hand, if the data in the cells ranging from the first column to the Mth column are summed up to obtain one data for one channel, called as a sum data, the measured data become a one-dimensional measured result. If the display of the diffraction pattern is desired, a graph should be created with the diffraction angle 2θ in abscissa and the sum data for each channel number corresponding to the angle 2θ in ordinate.

When the relatively-moving-image is recorded with the TDI operation of the CCD sensor, the CCD sensor should be always under the exposure state during the TDI operation.

Next, the control method for recording the still image with the use of the CCD sensor will be described below. There are four methods for the control method. The first and the second control methods utilize the internal transfer clock signal only: the first control method uses a long transfer period during the exposure time, whereas the second control method uses the halt condition of the transfer clock signal during the exposure time. The third control method utilizes both of the external transfer clock signal and the internal transfer clock signal. The fourth control method utilizes the external transfer clock signal only. The internal transfer clock is a transfer clock signal supplied from the built-in transfer clock generator circuit which is included in the TDI-operable CCD sensor. The external transfer clock signal is supplied from the image recording system using the CCD sensor, the image recording system being, for example, the above-described X-ray diffraction apparatus. Namely, the external transfer clock signal is a transfer clock signal supplied from the clock generator, which is included in the image recording system, to the CCD sensor.

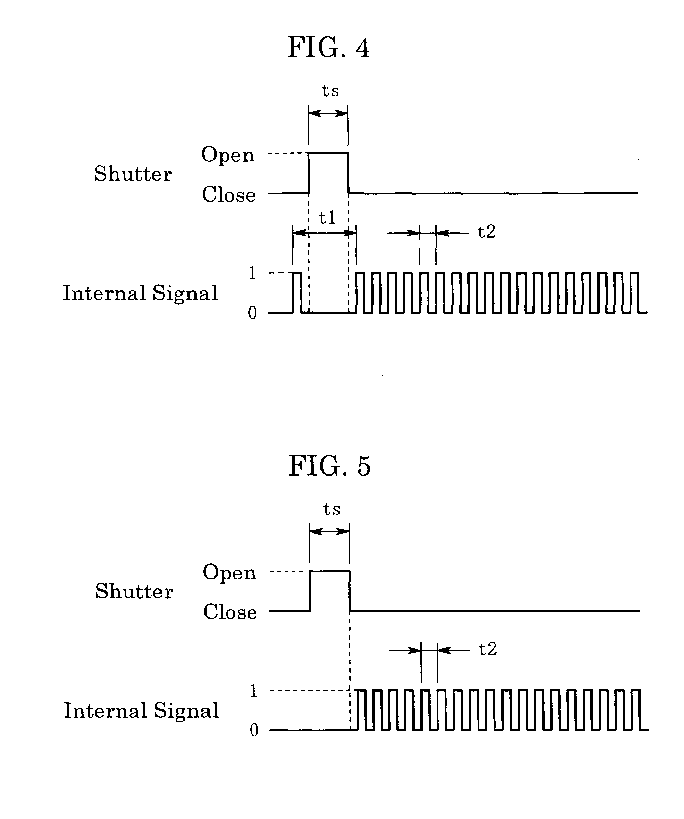

Fig. 4 shows a time chart indicating the first control method. The upper zone of the figure shows a chart indicating the shutter opening and closing, while the lower zone shows a chart indicating the internal transfer clock signal. It is noted that the term "internal transfer clock signal" will be abbreviated as "internal signal" hereinafter. The time period ts during which the shutter opens is an exposure time ts of the CCD sensor. The transfer period of the internal signal is set to t1 in the vicinity of the exposure time, the transfer period t1 being longer than the exposure time ts. The operation of the first control method will be described below in detail. The transfer period of the internal signal is set to t1 and thereafter the charge transfer operation starts. The shutter opens soon after one pulse generation of the internal signal. The photo acceptance cells of the CCD sensor are irradiated with an image ray during the exposure time ts, the image ray being stationary relative to the CCD sensor. Although the CCD sensor can execute the TDI operation, the CCD sensor can record a still image because of no reception of the next transfer clock signal during the exposure time. The next transfer clock signal is to come after the shutter closing. Actually, the charge transfer operation based on the transfer period t1 can be terminated at the time instant of the shutter closing, the next transfer clock signal not coming in the transfer period t1. The exposure time ts is, for example, 16.7 milliseconds, that is one sixtieth of one second, and the transfer period t1 is set far longer than the exposure time, 5 seconds for example. When the exposure time ts is changed as depending upon the energy intensity of the image to be recorded, the transfer period t1 also must be changed in response to the change of the exposure time.

After the shutter closing, the transfer period of the internal signal is changed from t1 to t2. The transfer period t2 is for readout of the recorded image and thus it should be as short as possible, 1 to 5 milliseconds for example.

It is true in principle that the recorded image can be read out with the transfer period t1 as it is even after the shutter closing. However, it would take a longer time for such a readout operation disadvantageously. Since a noise caused by a dark current which is peculiar to the CCD sensor increases as the transfer period becomes long, the transfer period t2 for the readout operation should be short because of the noise reduction too.

Next, the second control method will be described. Fig. 5 shows a time chart indicating the second control method which is different from the first control method shown in Fig. 4 in that the internal signal is under the halt condition in the vicinity of the exposure time ts. When the exposure time ts goes on and the shutter closes, the readout operation is carried out with the internal signal having a transfer period t2.

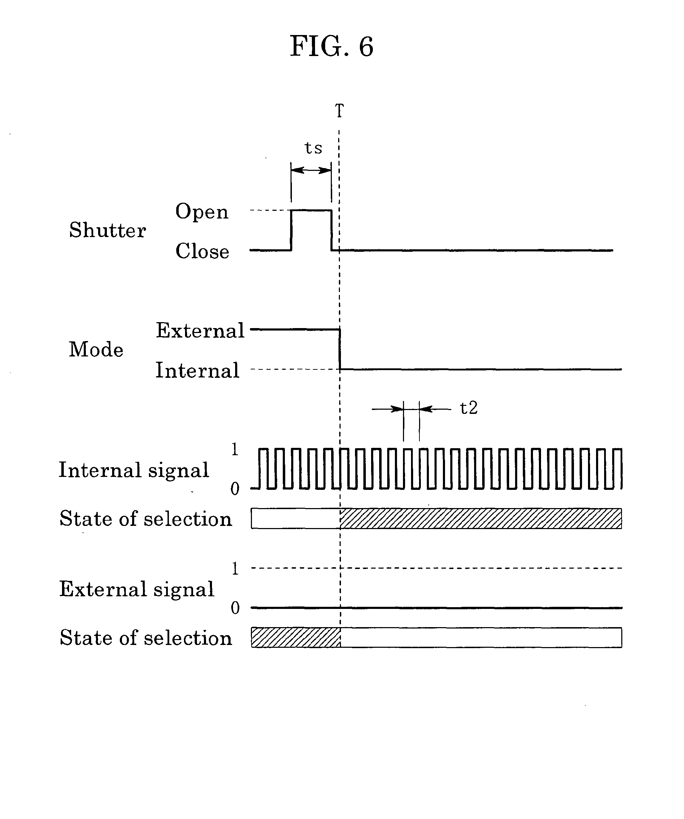

Next, the third control method will be described. Fig. 6 shows a time chart indicating the third control method. The first zone of the figure shows a chart indicating the shutter opening and closing. The second zone shows a chart indicating whether the control operation is in an external control mode or an internal control mode. The external control mode is a mode in which the charge transfer operation is carried out based on the external transfer clock signal, whereas the internal control mode is a mode in which the charge transfer operation is carried out based on the internal transfer clock signal. The third zone shows a chart indicating the internal signal. The fourth zone shows a chart indicating the external transfer clock signal. It is noted that the term "external transfer clock signal" will be abbreviated as "external signal" hereinafter. The internal signal chart and the external signal chart each has a bar expression for the "state of selection" below the signal chart. The bar expression should be construed as described below. When the operation is in the internal control mode, the state-of-selection bar below the internal signal chart is expressed by hatching for the period of the internal control mode. On the contrary, when the operation is in the external control mode, the state-of-selection bar below the external signal chart is expressed by hatching for the period of the external control mode.

The third control method described above makes the exposure step the external control method and the readout step the internal control method: the external control mode is before the time instant T and the internal control mode is after the time instant T. Before the time instant T, the CCD sensor executes the charge transfer operation based on the external signal, noting however that the external signal remains at zero, i.e., the transfer clock supplied from the external system becomes under the halt condition, before the time instant T as seen from Fig. 6. Accordingly, the CCD sensor virtually does not execute the charge transfer operation. The shutter opens for the exposure time ts before the time instant T to record an image on the CCD sensor. After the time instant T, the operation becomes the internal control mode in which an image is read out based on the transfer clock signal with a transfer period t2. The exposure time ts is 16.7 milliseconds and the transfer period t2 is 1 to 5 milliseconds, for example.

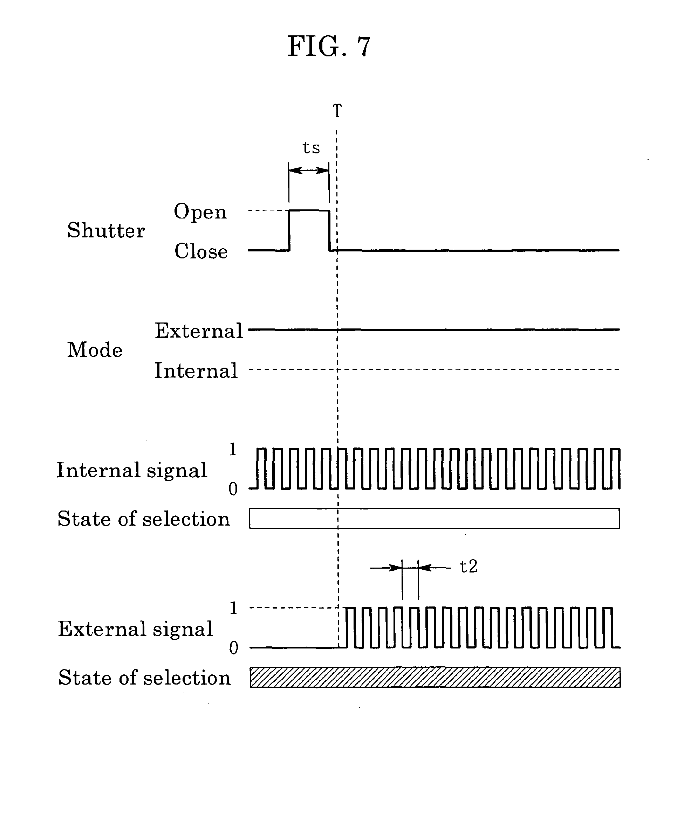

Next, the fourth control method will be described. Fig. 7 shows a time chart indicating the fourth control method. The first zone of the figure shows a chart indicating the shutter opening and closing. The second zone shows a chart indicating the control mode. The third zone shows a chart indicating the internal signal. The fourth zone shows a chart indicating the external signal.

The fourth control method utilizes always the external control mode for the still recording. Accordingly, the CCD sensor virtually does not execute the charge transfer operation during the still recording. The shutter opens during the exposure time ts before the time instant T to record an image on the CCD. After the time instant T, the transfer period of the external signal is set to t2 and the image is read out based on the external signal. The exposure time ts is 16.7 milliseconds and the transfer period t2 is 1 to 5 milliseconds, for example.

It is preferable to make the transfer period t2 in the readout step as short as possible to execute a high-speed readout operation in any control method described above, so that the readout time becomes short and a noise caused by the dark current is reduced. The transfer period t2 is preferably not greater than 10 milliseconds, more preferably within a range of 1 to 5 milliseconds.

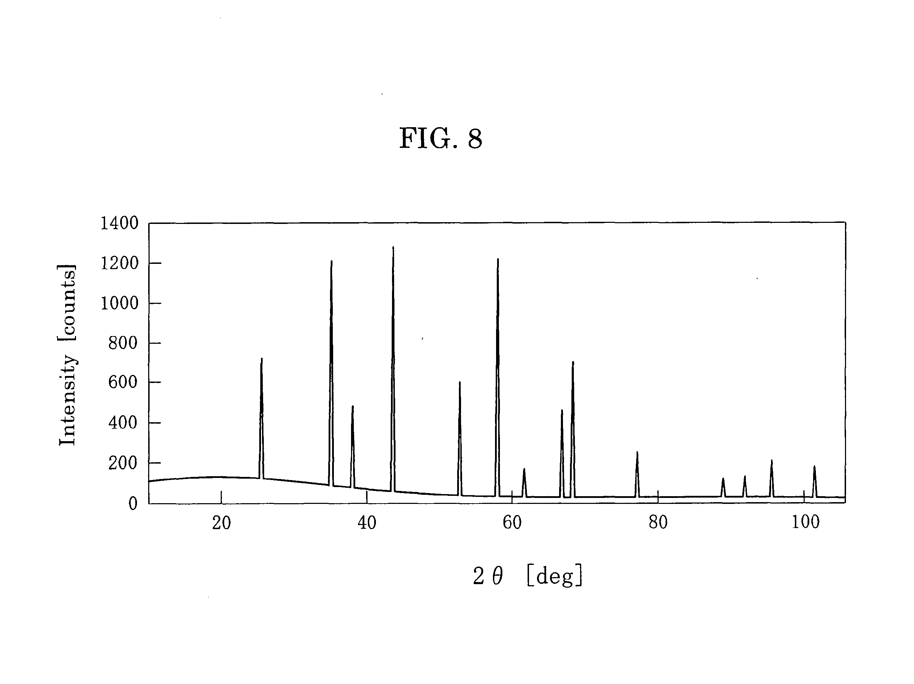

Next, the selection between the TDI recording mode and the still recording mode will be described. As shown in Fig. 1, when the TDI operation of the CCD sensor and the 2θ-rotation of the CCD sensor are synchronized with each other, a diffraction pattern, which is spatially stationary, can be recorded with the use of the moving CCD sensor. One example of the measured diffraction pattern is shown in Fig. 8.

If it is desired to record the variation of the diffraction profile depending upon the temperature variation in focusing attention on a certain diffraction peak, the below-described operation should be carried out. The 2θ position of the CCD sensor is arranged so that the certain diffraction peak is positioned at the center of the CCD sensor. Any one of the still recording modes shown in Figs. 4 through 7 is carried out with no 2θ-rotation to measure a diffraction peak profile. Next, similar measurement operations are carried out for the different sample temperatures so as to measure the temperature dependency of the diffraction peak.

As described above, the TDI recording mode and the still recording mode are selectively carried out with the same full frame transfer type CCD sensor to execute a variety of diffraction measurements.
- 10: sample
- 14: CCD sensor
- 16: X-ray beam
- 18: diffracted X-ray
- ts: exposure time
- t1: transfer period
- t2: transfer period

## Claims

1. A method for controlling a CCD sensor (14) comprising the steps of:
(a) preparing a full frame transfer type CCD sensor (14) ;
(b) selecting one of a TDI recording mode in which the CCD sensor (14) executes a TDI operation to record a moving image relative to the CCD sensor (14) and a still recording mode in which the CCD sensor (14) executes a still operation to record a stationary image relative to the CCD sensor (14); and
(c) executing the TDI recording mode when the TDI recording mode is selected, and executing the still recording mode when the still recording mode is selected.

2. A method according to claim 1, wherein when the still recording mode is selected the method further comprises the steps of:
(d) irradiating the CCD sensor (14) with an electromagnetic wave (18) to be measured during an exposure time (ts) less than a first transfer period (t1) under a condition of executing a charge transfer operation with the first transfer period (t1); and
(e) reading out the CCD sensor (14) by executing a charge transfer operation with a second transfer period (t2) less than the first transfer period (t1) under a condition of no irradiation of the CCD sensor (14) with the electromagnetic wave (18) to be measured.

3. A method according to claim 2, wherein:
(f) the electromagnetic wave (18) to be measured is a diffracted X-ray (18) in an X-ray diffraction apparatus;
(g) a charge transfer direction in the TDI operation coincides with a direction of variation in diffraction angle (2θ) of the diffracted X-ray (18); and
(h) a product of a transfer frequency of the TDI operation and a pixel size of the CCD sensor (14) along the charge transfer direction coincides with a relative speed between the CCD sensor (14) and the diffracted X-ray (18) in the direction of variation in diffraction angle (2θ).

4. A method according to claim 1, wherein when the still recording mode is selected the method further comprises the steps of:
(d) irradiating the CCD sensor (14) with an electromagnetic wave (18) to be measured during a predetermined exposure time (ts) under a condition of no supply of transfer clock signal to the CCD sensor (14); and
(e) reading out the CCD sensor (14) by executing a charge transfer operation with a predetermined transfer period (t2) under a condition of no irradiation of the CCD sensor (14) with the electromagnetic wave (18) to be measured.

5. A method according to claim 4, wherein:
(f) the electromagnetic wave (18) to be measured is a diffracted X-ray (18) in an X-ray diffraction apparatus;
(g) a charge transfer direction in the TDI operation coincides with a direction of variation in diffraction angle (2θ) of the diffracted X-ray (18); and
(h) a product of a transfer frequency of the TDI operation and a pixel size of the CCD sensor (14) along the charge transfer direction coincides with a relative speed between the CCD sensor (14) and the diffracted X-ray (18) in the direction of variation in diffraction angle (2θ).

6. A method according to claim 1, wherein when the still recording mode is selected the method further comprises the steps of:
(d) irradiating the CCD sensor (14) with an electromagnetic wave (18) to be measured during a predetermined exposure time (ts) in an external control mode, in which a charge transfer operation is carried out based on an external transfer clock signal, but under a halt condition of the external transfer clock signal; and
(e) reading out the CCD sensor (14) by executing a charge transfer operation based on an internal transfer clock signal under a condition of no irradiation of the CCD sensor (14) with the electromagnetic wave (18) to be measured after an exchange from the external control mode to an internal control mode in which a charge transfer operation is carried out based on the internal transfer clock signal.

7. A method according to claim 6, wherein:
(f) the electromagnetic wave (18) to be measured is a diffracted X-ray (18) in an X-ray diffraction apparatus;
(g) a charge transfer direction in the TDI operation coincides with a direction of variation in diffraction angle (2θ) of the diffracted X-ray (18); and
(h) a product of a transfer frequency of the TDI operation and a pixel size of the CCD sensor (14) along the charge transfer direction coincides with a relative speed between the CCD sensor (14) and the diffracted X-ray (18) in the direction of variation in diffraction angle (2θ).

8. A method according to claim 1, wherein when the still recording mode is selected the method further comprises the steps of:
(d) irradiating the CCD sensor (14) with an electromagnetic wave (18) to be measured during a predetermined exposure time (ts) in an external control mode, in which a charge transfer operation is carried out based on an external transfer clock signal, but under a halt condition of the external transfer clock signal; and
(e) reading out the CCD sensor (14) by executing a charge transfer operation based on the external transfer clock signal in the external control mode under a condition of no irradiation of the CCD sensor (14) with the electromagnetic wave (18) to be measured.

9. A method according to claim 8, wherein:
(f) the electromagnetic wave (18) to be measured is a diffracted X-ray (18) in an X-ray diffraction apparatus;
(g) a charge transfer direction in the TDI operation coincides with a direction of variation in diffraction angle (2θ) of the diffracted X-ray (18); and
(h) a product of a transfer frequency of the TDI operation and a pixel size of the CCD sensor (14) along the charge transfer direction coincides with a relative speed between the CCD sensor (14) and the diffracted X-ray (18) in the direction of variation in diffraction angle (2θ).

10. A method according to claim 1, wherein:
(d) the electromagnetic wave (18) to be measured is a diffracted X-ray (18) in an X-ray diffraction apparatus;
(e) a charge transfer direction in the TDI operation coincides with a direction of variation in diffraction angle (2θ) of the diffracted X-ray (18); and
(f) a product of a transfer frequency of the TDI operation and a pixel size of the CCD sensor (14) along the charge transfer direction coincides with a relative speed between the CCD sensor (14) and the diffracted X-ray (18) in the direction of variation in diffraction angle (2θ).

11. A CCD sensor system comprising:
(a) a full frame transfer type CCD sensor (14) ;
(b) means for executing a TDI recording mode in which the CCD sensor (14) executes a TDI operation to record a moving image relative to the CCD sensor (14);
(c) means for executing a still recording mode in which the CCD sensor (14) records a stationary image relative to the CCD sensor (14); and
(d) means for selecting and actuating one of the TDI recording mode executing means and the still recording mode executing means.

12. A system according to claim 11, wherein the still recording mode executing means includes:
(e) means for controlling irradiation of the CCD sensor (14) with an electromagnetic wave (18) to be measured during an exposure time (ts) less than a first transfer period (t1) under a condition of executing a charge transfer operation with the first transfer period (t1); and
(f) means for controlling readout of the CCD sensor (14) by executing a charge transfer operation with a second transfer period (t2) less than the first transfer period (t1) under a condition of no irradiation of the CCD sensor (14) with the electromagnetic wave (18) to be measured.

13. A system according to claim 11, wherein the still recording mode executing means includes:
(e) means for controlling irradiation of the CCD sensor (14) with an electromagnetic wave (18) to be measured during a predetermined exposure time (ts) under a condition of no supply of transfer clock signal to the CCD sensor (14); and
(f) means for controlling readout of the CCD sensor (14) by executing a charge transfer operation with a predetermined transfer period (t2) under a condition of no irradiation of the CCD sensor (14) with the electromagnetic wave (18) to be measured.

14. A system according to claim 11, wherein the still recording mode executing means includes:
(e) means for controlling irradiation of the CCD sensor (14) with an electromagnetic wave (18) to be measured during a predetermined exposure time (ts) in an external control mode, in which a charge transfer operation is carried out based on an external transfer clock signal, but under a halt condition of the external transfer clock signal; and
(f) means for controlling readout of the CCD sensor (14) by executing a charge transfer operation based on an internal transfer clock signal under a condition of no irradiation of the CCD sensor (14) with the electromagnetic wave (18) to be measured after an exchange from the external control mode to an internal control mode in which a charge transfer operation is carried out based on the internal transfer clock signal.

15. A system according to claim 11, wherein the still recording mode executing means includes:
(e) means for controlling irradiation of the CCD sensor (14) with an electromagnetic wave (18) to be measured during a predetermined exposure time (ts) in an external control mode, in which a charge transfer operation is carried out based on an external transfer clock signal, but under a halt condition of the external transfer clock signal; and
(f) means for controlling readout of the CCD sensor (14) by executing a charge transfer operation based on the external transfer clock signal in the external control mode under a condition of no irradiation of the CCD sensor (14) with the electromagnetic wave (18) to be measured.

16. An X-ray diffraction apparatus comprising:
(a) an X-ray source generating an X-ray (16) which is incident on a sample (10);
(b) a full frame transfer type CCD sensor (14) for detecting a diffracted X-ray (18) from the sample (10);
(c) means for moving the diffracted X-ray (18) relative to the CCD sensor (14);
(d) means for executing a TDI recording mode in which the CCD sensor (14) executes a TDI operation to record a moving image relative to the CCD sensor (14);
(e) means for executing a still recording mode in which the CCD sensor (14) records a stationary image relative to the CCD sensor (14); and
(f) means for selecting and actuating one of the TDI recording mode executing means and the still recording mode executing means.

17. An X-ray diffraction apparatus according to claim 16, wherein the still recording mode executing means includes:
(g) means for controlling irradiation of the CCD sensor (14) with the diffracted X-ray (18) during an exposure time (ts) less than a first transfer period (t1) under a condition of executing a charge transfer operation with the first transfer period; and
(h) means for controlling readout of the CCD sensor (14) by executing a charge transfer operation with a second transfer period (t2) less than the first transfer period (t1) under a condition of no irradiation of the CCD sensor (14) with the diffracted X-ray (18).

18. An X-ray diffraction apparatus according to claim 16, wherein the still recording mode executing means includes:
(g) means for controlling irradiation of the CCD sensor (14) with the diffracted X-ray (18) during a predetermined exposure time (ts) under a condition of no supply of transfer clock signal to the CCD sensor; and
(h) means for controlling readout of the CCD sensor (14) by executing a charge transfer operation with a predetermined transfer period (t2) under a condition of no irradiation of the CCD sensor (14) with the diffracted X-ray (18).

19. An X-ray diffraction apparatus according to claim 16, wherein the still recording mode executing means includes:
(g) means for controlling irradiation of the CCD sensor (14) with the diffracted X-ray (18) during a predetermined exposure time (ts) in an external control mode, in which a charge transfer operation is carried out based on an external transfer clock signal, but under a halt condition of the external transfer clock signal; and
(h) means for controlling readout of the CCD sensor (14) by executing a charge transfer operation based on an internal transfer clock signal under a condition of no irradiation of the CCD sensor (14) with the diffracted X-ray (18) after an exchange from the external control mode to an internal control mode in which a charge transfer operation is carried out based on the internal transfer clock signal.

20. An X-ray diffraction apparatus according to claim 16, wherein the still recording mode executing means includes:
(g) means for controlling irradiation of the CCD sensor (14) with the diffracted X-ray (18) during a predetermined exposure time (ts) in an external control mode, in which a charge transfer operation is carried out based on an external transfer clock signal, but under a halt condition of the external transfer clock signal; and
(h) means for controlling readout of the CCD sensor (14) by executing a charge transfer operation based on the external transfer clock signal in the external control mode under a condition of no irradiation of the CCD sensor (14) with the diffracted X-ray (18).
